# EUROPEAN PATENT APPLICATION

(11) **EP 1 925 364 A1**
(43) Date of publication of application: **28.05.2008**
(21) Application number: 06077078.1
(22) Date of filing: 23.11.2006
(51) Int. Cl.: B01L 3/00, B01J 19/00

(54) **Multiple microfluidic connector**

(71) Applicant: Nederlandse Organisatie voor Toegepast-Natuurwetenschappelijk Onderzoek TNO, 2628 VK Delft (NL)
(72) Inventor: Spierdijk, Johannes Petrus Franciscus, 2288 CA Rijswijk (NL); Hagen, Esther, 2727 RA Zoetemeer (NL); Van Loon, Johannes Maria, 2719 JE Zoetermeer (NL); Hoegaerts, Christophe Louis Gabriel, 2521 ZJ Den Haag (NL)
(74) Representative: van Loon, C.J.J.

(57) **Abstract**

Microfluidic system, comprising a male connector part (1) having a number of hollow connection needles (2) fixed to the male connector part at one needle end (3) and the opposite needle end (4) being radially movable in some degree.The microfluidic system, moreover, comprises a female connector part (5), comprising a number of hollow connection sockets (6) which are arranged to receive the respective free needle ends of the male connector part. The female connector part, moreover, comprises needle guidance means for guiding the free needle ends into their respective connection sockets. The male connector part may comprise a number of chambers (8a, 10) surrounding one or more of the needles over at least part of their length. The female connector part may comprise a number of chambers (9a, 11) surrounding one or more of the needle guidance means.

## Description

### Field of the invention

The invention concerns interconnection of microfluidic (µF) components, e.g. in the field of "lab-on-a-chip" applications.

### Background of the invention

Lab-on-a-chip (LOC) is a term for devices that integrate (multiple) laboratory functions on a single chip of only millimeters to a few square centimeters in size and that are capable of handling extremely small fluid volumes down to less than pico liters. Lab-on-a-chip devices are a subset of MEMS devices and often indicated by "Micro Total Analysis Systems" (µTAS) as well. Microfluidics is a broader term that describes also mechanical flow control devices like pumps and valves or sensors like flowmeters and viscometers. However, strictly regarded "Lab-on-a-Chip" indicates generally the scaling of single or multiple lab processes down to chip-format, whereas "µTAS" is dedicated to the integration of the total sequence of lab processes to perform (bio)chemical analysis. The term "Lab-on-a-Chip" was introduced later on when it turned out that µTAS technologies were more widely applicable than only for analysis purposes.

After the discovery of microtechnology (~1958) for realizing integrated semiconductor structures for microelectronic chips, these lithography-based technologies were soon applied in pressure sensor manufacturing (1966) as well. Due to further development of these usually CMOS-compatibility limited processes, a tool box became available to create micrometre or sub-micrometre sized mechanical structures in silicon wafers as well: the Micro Electro Mechanical Systems (MEMS) era (also indicated with Micro System Technology - MST) had started.

Next to pressure sensors, airbag sensors and other mechanically movable structures, fluid handling devices were developed. Examples are: channels (capillary connections), mixers, valves, pumps and dosing devices. The first LOC analysis system was a gas chromatograph, developed in 1975 by S.C. Terry - Stanford University. However, only at the end of the 1980's, and beginning of the 1990's, the LOC research started to seriously grow as a few research groups in Europe developed micropumps, flowsensors and the concepts for integrated fluid treatments for analysis systems. These µTAS concepts demonstrated that integration of pre-treatment steps, usually done at lab-scale, could extend the simple sensor functionality towards a complete laboratory analysis, including e.g. additional cleaning and separation steps.

A big boost in research and commercial interest came in the mid 1990's, when µTAS technologies turned out to provide interesting tooling for genomics applications, like capillary electrophoresis and DNA microarrays. A big boost in research support also came from the military, especially from DARPA (Defense Advanced Research Projects Agency), for their interest in portable bio/chemical warfare agent detection systems. The added value was not only limited to integration of lab processes for analysis but also the characteristic possibilities of individual components and the application to other, non-analysis, lab processes. Hence the term "Lab-on-a-Chip" was introduced.

Although the application of LOCs is still novel and modest, a growing interest of companies and applied research groups is observed in different fields such as analysis (e.g. chemical analysis, environmental monitoring, medical diagnostics and cellomics) but also in synthetic chemistry (e.g. rapid screening and microreactors for pharmaceutics). Besides further application developments, research in LOC systems is expected to extend towards downscaling of fluid handling structures as well, by using nanotechnology. Sub-micrometre and nano-sized channels, DNA labyrinths, single cell detection and analysis and nano-sensors might become feasible that allow new ways of interaction with biological species and large molecules. One commercially very successful example for LOCs in life science is the developement of automated patch clamp chips, that allowed for drastically increased throughput for drug screening in the pharmaceutical industry.

The basis for most LOC fabrication processes is lithography. Initially most processes were in silicon, as these well-developed technologies were directly derived from semiconductor fabrication. Because of demands for e.g. specific optical characteristics, bio- or chemical compatibility, lower production costs and faster prototyping, new processes have been developed such as glass, ceramics and metal etching, deposition and bonding, PDMS processing (e.g., soft lithography), thick-film- and stereolithography as well as fast replication methods via electroplating, injection molding and embossing. Furthermore the LOC field more and more exceeds the borders between lithography-based microsystem technology, nano technology and precision engineering.

Typical advantages of LOCs are:
- low fluid volumes consumption, because of the low internal chip volumes, which is beneficial for e.g. environmental pollution (less waste), lower costs of expensive reagents and less sample fluid is used for diagnostics
- higher analysis and control speed of the chip and better efficiency due to short mixing times (short diffusion distances), fast heating (short distances, high wall surface to fluid volume ratios, small heat capacities)
- better process control because of a faster response of the system (e.g. thermal control for exothermic chemical reactions)
- compactness of the systems, due to large integration of functionality and small volumes
- massive parallelization due to compactness, which allows high-throughput analysis
- lower fabrication costs, allowing cost-effective disposable chips, fabricated in mass production
- safer platform for chemical, radioactive or biological studies because of large integration of functionality and low stored fluid volumes and energies

### Disadvantages of LOCs are:

- novel technology and therefore not fully developed yet
   physical effects like capillary forces and chemical effects of channel surfaces become more dominant and make LOC systems behave differently and sometimes more complex than conventional lab equipment
- detection principles may not always scale down in a positive way, leading to low signal to noise ratios

One specific problem concerns multiple (inter)connection of µF components, wherein a multiplicity of fluidic channels have to be interconnected. Due to the µ-scale of the components and thus the connectors, multiple connectors of the prior art have to be manufactured using very narrow dimensional tolerances. Without application of those very narrow dimensional tolerances leakage may occur and/or the connection is susceptible for loosening or sticking due to the mutual pitch differences at male and female side respectively.

### Summary of the invention

One aim of the invention is to present a microfluidic system which has advantages w.r.t. its production costs in view of the requested precision. Another aim is to present a microfluidic system which has improved sealing reliability. Yet another aspect is to present a microfluidic system comprising connecting parts which stick better together.

The preferred microfluidic system comprises a male connector part having a number of hollow connection needles fixed to the male connector part at one needle end while the opposite needle end is radially movable in some degree. The preferred microfluidic system, moreover, comprises a female connector part, comprising a number of hollow connection sockets which are arranged to receive the respective free needle ends of the male connector part, and the female connector part, moreover, preferrably comprises needle guidance means for guiding the free needle ends of the male connector part into their respective connection sockets.

As a result of the capability of the free needle ends of the male connector part to move, preferrably elastically, sideways, and the needle guidance means of the female connector part to guide those free needle ends into the connection sockets, in practice the aims of the invention can be reached.

In the microfluidic system as outlined above, the male connector part may comprise a number of chambers surrounding one or more of the needles over at least part of their length. On the other side, instead of or additional to that, the female connector part may comprise a number of chambers surrounding one or more of the needle guidance means. The chambers of the female connector part may e.g. each surround one of the connection sockets and may be integrated with the needle guidance means. It may be preferred that the chambers of the female connector part each surround one of the connection sockets and have a conical shape over at least part of its length, narrow at the side of the connection socket and wide at the other side.

### Exemplary Embodiment

Figures 1a, 1b and 1c show a first embodiment of the invention;
Figures 2a, 2b and 2c show a second embodiment of the invention;
Figures 3a and 3bshow a third embodiment of the invention;
Figures 4a and 4b show a fourth embodiment of the invention;
Figure 5 shows also the fourth embodiment.

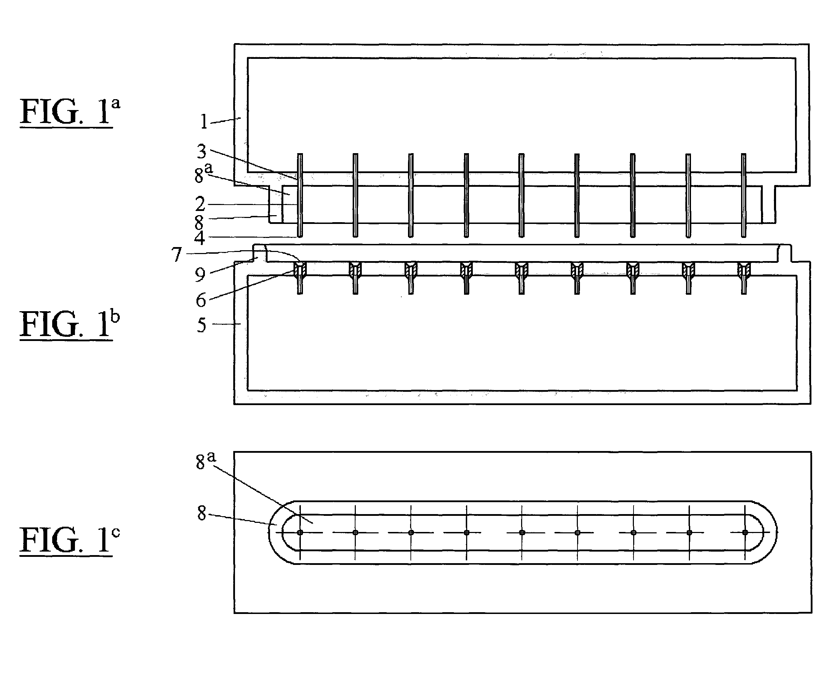

The microfluidic system shown in figure 1a, 1b and 1c comprises a male connector part 1 having a number of hollow connection needles 2 which are fixed to the male connector part at one (fixed) needle end 3. In fact it may be not the needle's extremity, as can be seen in the figures, but for sake of simplicity portion 3 is, in the foregoing and the following, considered as and called the needle's fixed end. The opposite needle end 4, called its free end, is radially movable in some degree, e.g. due to the needle's slim shape and its material elasticity. The needle end 4 preferrably may be rounded off somewhat.

The microfluidic system, moreover, comprises a female connector part 5, comprising a number of hollow connection sockets 6 which are arranged to receive the respective free needle ends 4 of the male connector part. The female connector part 5, moreover, comprises needle guidance means for guiding the free needle ends 4 into their respective connection sockets 6, which are formed, in this embodiment by formed by a bevel 7.

The male connector part 1 comprises a number of chambers surrounding one or more of the needles over part of their length. In the embodiment of figure 1, the number of chambers is one, viz. the "chamber" which is formed by a stand-up collar 8 which surrounds all the needles 2. The shape of collar 8 can be seen in the bottom view of the male connector part 1, shown in figure 1c.

The female connector part 5 comprises also a stand-up collar 9 which surrounds the connection sockets 6 including their needle guiding bevels 7. The collars 8 and 9 have matching (however with a not-sticking fit) shapes, enabling the male and female connector parts - and their needles 2 and sockets 6 - to align during connection. The collars 8 and 9 are dimensioned such that they have a "rattle fit" the one another. The same applies also for the chambers and collars surrounding the needles 2 and/or sockets 6 in the other embodiments, thus providing that they do not stick in each other and do not hamper the proper operation of the needles and sockets.

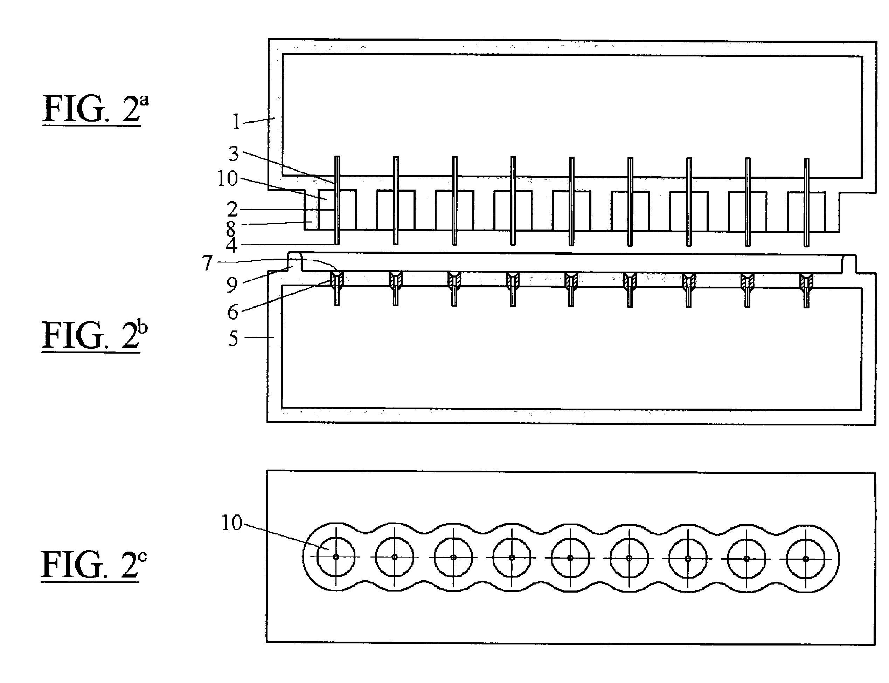

In the embodiment of the microfluidic system shown in figure 2 the male connector part 1 comprises a number of chambers, each surrounding one of the needles 2 over part of its length. The chambers 10 can also be seen in the bottom view of the male connector part 1, shown in figure 2c. For the rest, the embodiments of the male and female connector parts 1 and 2 are equal to those shown in figure 1.

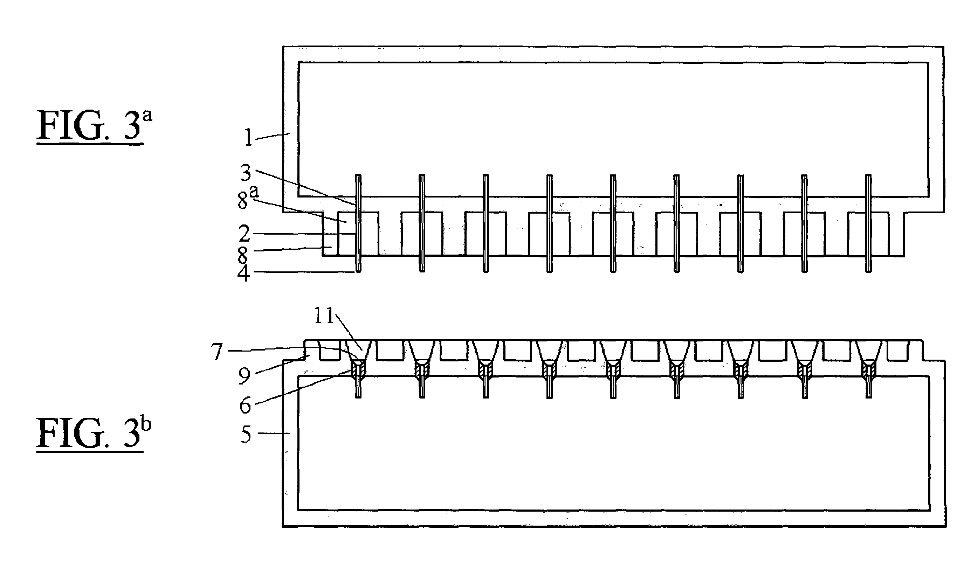

In the embodiment of the microfluidic system shown in figure 3 the female connector part 5 comprises chambers 11, each surrounding one of the connection sockets 6. Those chambers 11 have a conical shape, narrow at the side of the connection socket 6 and wide at the other side. In that way the needle guidance means for guiding the free needle ends 4 into their respective connection sockets 6, are partly formed by the bevels 7 as in the previous embodiments, and additionally by the conical chambers 11.

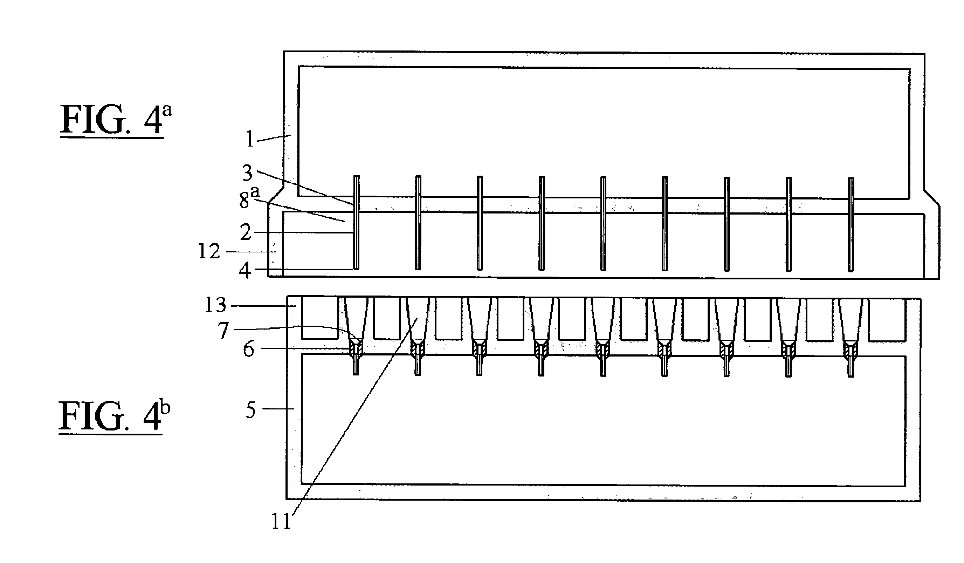

Fig 4 shows another embodiment of the connector. In this embodiment the male connector part 1 comprises a collar 12, which matches with the outer shape of the female connector part 5 and of a collar 13 on it, thus enabling guiding and aligning of the connector parts during their interconnecting movement. In this embodiment the needles 2 are not surrounded individually, but as a whole by the collar 12, which protects the needles 2 and provides for guiding/aligning during the interconnection movement of the parts. In this embodiment the conical guidance chambers 11 are rather long, enabling optimal guidance of the (radially movable) needle ends 4 towrds their respective connection sockets 6.

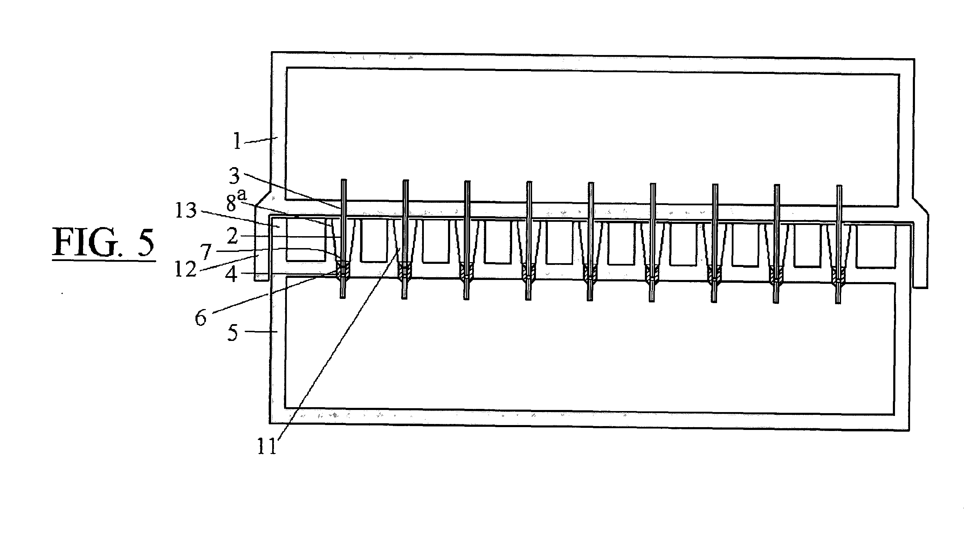

Figure 5 shows the embodiment of figure 4 in interconnected position.

The connector parts 1 and 5 will stick together due to the mutual pitch differences between the needles and the connection sockets, which in practice will lead to elastic deformations and friction forces in the needle socket combinations. This elastic deformation enables re-use of the connector parts. Also no elastic (e.g. rubber) gaskets etc. will be needed to get this clamping behaviour. For sake of clarity it is stressed that the ("rattle") fit of the cooperating collars 8/9 and 12/13 respectively do not play any role in sticking together the male and female connector parts 1 and 5.

The design of the connector enables easy and cheap manufacure because the requirements for precision (e.g. dimensional tolerances) are lower. When e.g. one of the connector parts, either the male part or the female part, is a so-called disposable device, this fact may lead to substantial reduction of the production costs. The low tolerance requirements remain unchanged when the connectors are miniaturized. At dimensions of tenths of micrometers in stead of tenths of millimeters, the present new connector design will still satisfy. Because pitch variations in miniature applications will rather occur, in that case this connector design will be still more advantageous, while many connector designs will not work even more after miniaturization or will become more or too complex.

The (conical) bevel 7 and the conical inner shape of the chambers 11 make the needles 2 self-guiding. The connector has that property only because of the mobility of the free needle ends 4.

## Claims

1. Microfluidic system, comprising a male connector part (1) having a number of hollow connection needles (2) fixed to the male connector part at one needle end (3) and the opposite needle end (4) being radially movable in some degree; the microfluidic system, moreover, comprising a female connector part (5), comprising a number of hollow connection sockets (6) which are arranged to receive the respective free needle ends of the male connector part; the female connector part, moreover, comprising needle guidance means for guiding the free needle ends into their respective connection sockets.

2. Microfluidic system according to claim 1, the male connector part comprising a number of chambers (8a, 10) surrounding one or more of the needles over at least part of their length.

3. Microfluidic system according to claim 2, chambers (10) of the male connector part each surrounding one of the needles (2) over at least part of its length.

4. Microfluidic system according to claim 1, 2 or 3, the female connector part comprising a number of chambers (9a, 11) surrounding one or more of the needle guidance means.

5. Microfluidic system according to claim 4, the chambers (11) of the female connector part each surrounding one of the connection sockets (6).

6. Microfluidic system according to claim 5, the chambers of the female connector part each having a conical shape over at least part of its length, narrow at the side of the connection socket and wide at the other side.
